# FASCICULE DE BREVET EUROPEEN

(11) **EP 0 880 438 B1**
(45) Date de publication et mention de la délivrance du brevet: **17.12.2003**
(21) Numéro de dépôt: 97937636.5
(22) Date de dépôt: 19.08.1997
(51) Int. Cl.: B32B 27/36, B65D 1/02, C08J 5/18

(54) **CONDITIONNEMENT POUR BOISSON A BASE D'ANETHOLE**
BEHÄLTER FÜR EIN ANETHOLHALTIGES GETRÄNK
PACKAGING FOR ANETHOLE BASED BEVERAGE

(30) Priorité: 21.08.1996 FR 9610335
(43) Date de publication de la demande: 02.12.1998
(73) Titulaire: Pernod-Ricard, 75783 Paris cedex 16 (FR)
(72) Inventeur: ROBICHON, Patrice, F-78400 Chatou (FR)
(74) Mandataire: Ahner, Francis
(86) Numéro de dépôt international: FR9701499
(87) Numéro de publication internationale: WO98007566

(56) Documents cités:
- US-A- 5 908 678
- DATABASE WPI Section Ch, Week 9239 Derwent Publications Ltd., London, GB; Class A32, AN 92-319511 XP002029475 & JP 04 223 134 A (MITSUI PETROCHEM IND CO LTD) , 13 août 1992
- DATABASE WPI Section Ch, Week 9212 Derwent Publications Ltd., London, GB; Class A23, AN 92-093881 XP002029476 & JP 04 039 025 A (MITSUI PETROCHEM IND CO LTD) , 10 février 1992
- DATABASE WPI Section Ch, Week 9212 Derwent Publications Ltd., London, GB; Class A23, AN 92-093880 XP002029477 & JP 04 039 024 A (MITSUI PETROCHEM IND CO LTD) , 10 février 1992
- DATABASE WPI Section Ch, Week 9114 Derwent Publications Ltd., London, GB; Class A23, AN 91-096849 XP002029478 & JP 03 039 250 A (MITSUI PETROCHEM IND CO LTD) , 20 février 1991
- DATABASE WPI Section Ch, Week 8704 Derwent Publications Ltd., London, GB; Class A23, AN 87-024470 XP002029479 & JP 61 279 553 A (TEIJIN LTD) , 10 décembre 1986
- DATABASE WPI Section Ch, Week 8603 Derwent Publications Ltd., London, GB; Class A26, AN 86-018185 XP002029480 & JP 60 242 049 A (TEIJIN LTD) , 2 décembre 1985
- Ullmann's Encyclopedia of Industrial Chemistry, 5me. éd., tôme A11 (1988); VCH Verlagsgesellschaft mbH, Weinheim (DE); p. 105
- L. Sherman: "Get ready for PEN blow molding"; Plastics Technology, mai 1995 (version Internet)
- Encyclopedia of Polymer Science and Engineering, tôme 2 (1985); John Wiley & Sons, New York (US); p. 176, 177
- Kirk-Othmer Encyclopedia of Chemical Technology, 4me éd.; tôme 19 (1996); John Wiley & Sons, New York (US); p. 622

## Description

La présente invention concerne un nouveau conditionnement contenant une boisson aqueuse, alcoolisée ou non, à base d'anéthole.

Elle concerne également un procédé destiné à limiter la déperdition d'anéthole contenu dans une solution éventuellement alcoolisée au contact de la paroi en matière polymère d'un conditionnement ainsi que l'utilisation d'un film polymère pour la réalisation d'un conditionnement en contact avec des solutions d'anéthole éventuellement alcoolisées afin de limiter la déperdition d'anéthole au contact de la paroi du conditionnement.

Les boissons anisées contiennent de l'anéthole ou para propényl méthoxy benzène, sous forme majoritaire trans (supérieure à 96-97 %). L'anéthole présente la particularité d'être très peu soluble dans l'eau (< 50 mg/l) et soluble dans l'alcool. En présence d'eau, l'anéthole se trouble, alors que dans une solution eau/alcool à forte teneur en alcool (de l'ordre de 45 % en volume), l'anéthole reste à l'état solubilisé (2g/l).

Dans le cas des boissons sans alcool ou faiblement alcoolisées (4-9 % vol), on a recours à un émulsifiant car l'anéthole n'est plus soluble.

Lors de la conservation de boissons anisées, des dégradations importantes apparaissent au cours du temps, notamment sous l'action de :
- la lumière (isomérisation cis-trans),
- l'oxydation en présence de lumière,
- l'interaction entre l'anéthole et le matériau de conditionnement.

Si on a pu pallier les deux premiers inconvénients précités à l'aide d'emballages opaques aux ultra-violet et présentant un effet barrière aux gaz, il n'en n'est pas de même en ce qui concerne le troisième point relatif à la déperdition d'anéthole au contact du matériau de conditionnement.

De fait, dans le cas des conditionnements en polymère utilisés classiquement (polyéthylène, polypropylène, polychlorure de vinyle, polyéthylène téréphtalate), on observe au cours du temps une perte très importante d'arôme, (jusqu'à 100 %) au contact des parois polymères, ce qui empêche de commercialiser les boissons anisées dans des emballages plastiques.

Ce problème est encore plus sensible dans le cas des boissons sans alcool ou faiblement alcoolisées à base d'anéthole pour lesquelles la déperdition au contact du polymère est encore plus rapide.

Plusieurs observations scientifiques illustrent le comportement particulier de ce composé :

L'anéthole présente un faible coefficient de solubilité dans l'eau mais un coefficient de solubilité élevé dans les polymères. Ce phénomène est d'autant plus important pour les boissons peu ou pas alcoolisées. Cela induit une interaction électrostatique importante avec la surface du polymère et l'adsorption de l'anéthole sur celle-ci.

Par ailleurs, l'affinité de l'anéthole pour les polymères est telle qu'il se produit un phénomène d'absorption, par insertion de ce composé entre les chaînes du polymère. Il s'agit donc d'un phénomène dynamique d'adsorption/absorption.

L'anéthole révèle en outre une forte propension à polymériser en polyanéthole. Cette polymérisation de type cationique est favorisée par le caractère très donneur d'électrons du groupement méthoxy. Ce phénomène se produit notamment dans le cas des polymères dérivés du styrène, d'anhydride maléique ou d'acrylonitrile couramment utilisés en tant que conditionnements pour boissons. Ceci est dû au fait que l'anéthole réagit avec les chaînes moléculaires de ces polymères.

Mais l'anéthole peut également réagir avec les monomères résiduels étant donné la réaction de copolymérisation bien connue avec le styrène (T. Higashimura et al, Journal of Polymer Science : part A.1, vol. 10, 85-93 (1972)) ou la terpolymérisation avec l'anhydride maléique et les monomères acryliques tels que l'acrylonitrile (T. Kobuko et al, Macromolecules, vol. 3, n° 5, Sept-Oct. 1970, 518-523).

Pour toutes ces raisons, on ne connaît pas, à l'heure actuelle de conditionnements en matière plastique pour boissons à base d'anéthole.

C'est pourquoi actuellement les boissons anisées sont conditionnées dans des bouteilles en verre.

Le brevet US 5 908 678 décrit des conditionnements à base d'un terpolymère de méthylacrylate/acrylonitrile/butadiène permettant d'obtenir des performances d'inertie du verre.

Le document "A plastics technology" (1995) mentionne que des bouteilles à base de polyéthylène naphtalate sont utilisées pour réaliser des emballages moulés par soufflage étirage. Le document suggère seulement que le PEN pourrait remplacer le PET, compte-tenu de sa résistance au chauffage et ses performances de barrière très nettement supérieures à celles du polyéthylène téréphtalate.

Il est donc souhaitable de proposer de nouveaux conditionnements en matière polymère permettant d'atteindre ou d'approcher les performances d'inertie du verre.

Après des recherches systématiques, la société déposante a mis au point un nouveau conditionnement destiné à contenir des boissons anisées éventuellement alcoolisées qui présente des caractéristiques satisfaisantes, notamment en ce qui concerne l'absence de sorption de l'anéthole.

On a en effet trouvé que contrairement au polyéthylènetérephtalate qui présente une très forte absorption vis-à-vis de l'anéthole, le polyester d'éthylène glycol et d'acide naphtalène (PEN) révèlait au contraire une très faible absorption vis-à-vis de l'anéthole.

C'est pourquoi, l'invention a en premier lieu pour objet un conditionnement pour une boisson éventuellement alcoolisée comprenant de l'anéthole, caractérisé en ce que la couche dudit conditionnement en contact avec ladite boisson est formée d'un film PEN.

Par "conditionnement", on entendra tout emballage monocouche ou multicouches susceptible de contenir ladite boisson, que ce soit sous forme de bouteille, de boîte ou d'autres systèmes fermés équivalents, y compris les outres et poches.

Dans le cadre de la présente invention la notion de conditionnement s'étend également aux moyens d'obturation et d'étanchéité des différents contenants rappelés ci-dessus.

La présente invention concerne en particulier les moyens d'obturation pour tout conditionnement destiné à contenir une boisson à base d'anéthole.

Un tel moyen d'obturation est avantageusement pourvu d'une pellicule interne formée d'un film de polymère comprenant des motifs aromatiques condensés venant en application sur l'ouverture dudit conditionnement.

Il peut en particulier être constitué d'une capsule cylindrique à l'intérieur de laquelle est logée une pellicule interne formée d'un film de polymère comprenant des motifs aromatiques condensés venant en application sur l'ouverture dudit conditionnement.

Il est bien entendu que ce polymère est linéaire et donc thermoplastique.

Une seconde caractéristique importante de ce polymère est son degré de cristallinité. On a en effet trouvé qu'une sorption particulièrement faible était observée lorsque le polymère présentait un degré de cristallinité supérieur ou égal à 20 % et de préférence compris entre 20 et 45 %, avantageusement 20 et 30 %.

Très brièvement, on sait que la cristallinité est liée à l'accroissement de l'ordre au sein des chaînes de polymères, notamment par l'alignement de celles-ci les unes par rapport aux autres.

On connaît des procédés permettant d'augmenter la cristallinité, grâce à un relâchement des contraintes par un recuit au-delà de 20 % et même jusqu'à 45 %. C'est le cas du polyéthylène naphtalate.

Parmi ces procédés, on peut citer les procédés dits SRF ou SRCF développés par la société SIDEL.

Le recuit peut être effectué par différentes technologies, notamment par la technologie du moule chaud ou par ramollissement du produit bi-étiré.

Le procédé SRCF est un mode de réalisation particulier du procédé général dans lequel, pour augmenter la cristallinité des polyesters aromatiques, le polyester sous forme polymérisée est d'abord bi-étiré, puis ramolli de façon à relâcher les contraintes induites par le bi-étirage puis, seulement alors, amené à la forme définitive.

Le procédé SRCF, qui est dérivé du procédé froid ou procédé en deux étapes, part d'une préforme fabriquée sur une presse indépendante. La suite du procédé comprend 4 étapes :
1°) on chauffe le corps de la préforme,
2°) on souffle avec bi-orientation une première bouteille surdimensionnée,
3°) on passe cette bouteille dans un four à infrarouge dit "four de recouvrance", il se produit deux choses, d'une part la bague est cristallisée et devient blanche, d'autre part, sous l'effet de la température, 200°C pendant environ 1 minute 30, le corps de la bouteille se rétracte : les contraintes induites lors des étapes de bi-étirage se sont relachées, la bouteille prend alors une forme de "patatoïde", la densité du PEN composant le corps de l'article a fortement augmenté, le PEN est désormais cristallisé, il est devenu résistant à la chaleur,
4°) on finit alors l'article par un second soufflage avec bi-orientation, la bouteille trouvant alors sa forme définitive.

Le conditionnement s'est révélé particulièrement intéressant dans le cas des boissons non alcoolisées ou faiblement alcoolisées dont la teneur en alcool est de préférence inférieure à 10 % en volume, de préférence entre 3 et 9 %.

De façon connue, la boisson aqueuse alcoolisée comprend de 0,01 à 2 g/l d'anéthole, de préférence 0,02 g/l ou plus d'anéthole.

Dans les concentrés à diluer tels que la boisson connue sous la dénomination "Pastis", la concentration en anéthole est de l'ordre de 2 g/l. Dans les boissons alcoolisées prêtes à boire, elle est de l'ordre de 200 à 400 mg/l. Dans le cas des boissons aromatisées à l'anis, elle est de l'ordre de 10 à 50 mg/l.

On rappellera que pour les boissons alcoolisées à 45 % en volume, l'anéthole est entièrement solubilisé, tandis que pour les boissons sans alcool ou faiblement alcoolisées (4-9 % en volume), on a recours à un émulsifiant afin de maintenir l'anéthole sous forme d'émulsion stable.

En général, outre les caractéristiques de barrière vis-à-vis de l'anéthole, les conditionnements selon l'invention doivent présenter une imperméabilité suffisante vis-à-vis du gaz carbonique. Ils doivent également présenter une résistance au déchirement et un module d'élasticité suffisant pour l'application considérée.

Le conditionnement peut se présenter sous la forme d'une monocouche ou sous la forme multicouche.

Dans le cas d'un conditionnement multicouche, la pellicule interne est formée d'un film de polymère PEN . Le film est associé par exemple au moyen d'un adhésif à un matériau de structure, lui-même éventuellement multicouche (métal, carton, matériau mono ou multicouche polymérique).

L'épaisseur de la pellicule interne est comprise entre 50 et 200 µm et doit être en général suffisante pour satisfaire aux différents critères indiqués ci-dessus.

Il peut donc s'agir de boîtes en métal, notamment aluminium recouvertes intérieurement d'une pellicule de polymère PEN.

Il peut également s'agir de boîtes en carton, communément appelées "berlingots" ou "briques" recouvertes intérieurement d'une pellicule de polymère PEN.

On mentionnera plus particulièrement les bouteilles formées d'une couche externe en polypropylène et d'une pellicule interne de polymère PEN . Ces deux couches sont par exemple associées à l'aide d'un adhésif ou "liner".

Selon une forme de réalisation préférée, le conditionnement est sous la forme d'une monocouche d'un polymère PEN.

L'épaisseur des bouteilles monocouches ou multicouches est en général de 0,2 à 0,5 mm pour le corps et 0,5 à 2,5 mm pour le fond bien que ces épaisseurs puissent varier selon l'importance du container.

La mise en oeuvre de tels polymères est effectuée sur une machine d'injection soufflage usuelle, telle que celle utilisée pour le PET avec ou sans bi-orientation, selon les procédés classiques en une ou deux étapes.

Il s'agit donc d'une mise en oeuvre peu onéreuse, ne nécessitant pas l'utilisation d'une machine spécifique au produit.

Les conditionnements se présentent donc sous la forme d'un matériau monocouche ou multicouche obtenu notamment par injection soufflage.

Les conditionnements selon l'invention peuvent conserver une boisson à base d'anéthole notamment faiblement ou non alcoolisée, dans les mêmes conditions qu'une bouteille en verre, c'est-à-dire sans dégradation substantielle des qualités organoleptiques.

Ils sont de plus transparents dans le cas des conditionnements monocouches ou des conditionnements multicouches où les couches de structure sont transparentes, faciles à transformer et bon marché.

L'invention concerne également un moyen d'obturation notamment pour lesdits conditionnements pourvu d'une pellicule interne en matériau imperméable à l'anéthole d'un polymère PEN.

Toutes les variantes indiquées ci-dessus relatives aux conditionnements s'appliquent audit moyen d'obturation.

Ce moyen d'obturation est notamment une capsule cylindrique à l'intérieur de laquelle est logée une pellicule interne d'un polymère tel que défini ci-dessus.

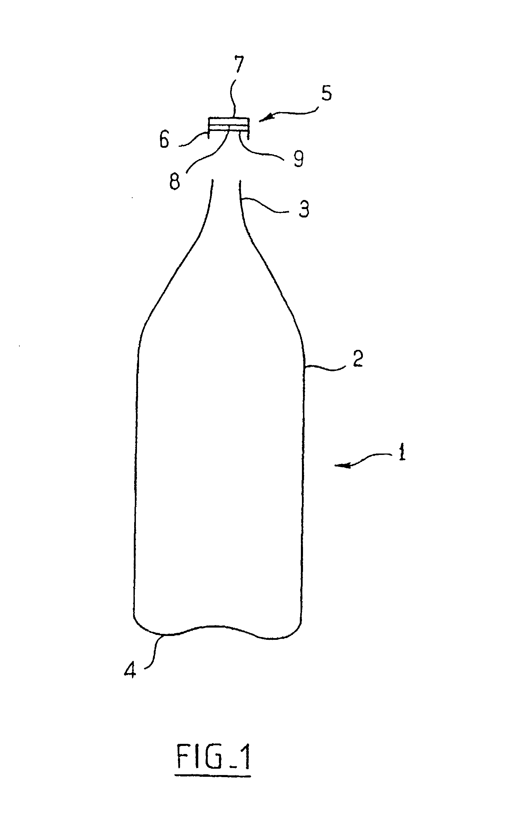

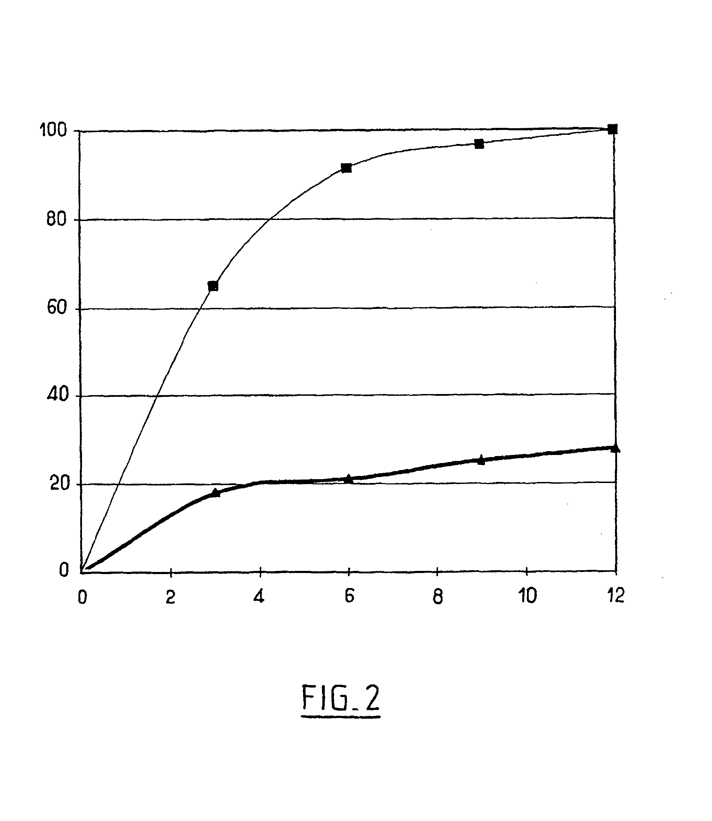

On a représenté sur la figure 1 annexée une bouteille, vue en coupe longitudinale, dans laquelle la bouteille 1 formée d'un corps 2 cylindrique, d'un goulot 3 et d'un fond 4 est constituée d'un matériau polymère en polyéthylène naphtalate.

La bouteille présente une épaisseur de 0,2 mm au niveau du corps cylindrique et de 0,6 mm au niveau du fond.

La capsule 5 est formée d'un corps cylindrique 6 et d'une base circulaire 7. A l'intérieur de la capsule 5 est logé un disque 8 formé d'une couche en PEN 8 appliquée sur la face intérieure de la base et une couche en PEN 9 venant en appui sur le goulot 3.

L'invention concerne également l'utilisation d'un polymère comprenant des motifs aromatiques condensés, pour la réalisation d'un conditionnement monocouche ou multicouche pour boissons à base d'anéthole, notamment faiblement alcoolisées, afin de limiter la déperdition d'anéthole au contact de la paroi du conditionnement, ledit polymère formant la couche en contact avec lesdites boissons.

L'invention concerne également un procédé destiné à limiter la dégradation des boissons à base d'anéthole, notamment faiblement ou non alcoolisées, caractérisé en ce que l'on emmagasine lesdites boissons dans un conditionnement de longue durée monocouche ou multicouche dont la couche en contact avec lesdites boissons est constituée d'un polymère PEN.

L'invention est maintenant illustrée par les exemples suivants, donnés à titre illustratif.

### Exemple 1

Des bouteilles constituées d'une monocouche de polyéthylène glycol naphtalate (PEN) d'une cristallinité voisine de 25 % de 1,5 l, pesant 59 g, d'épaisseur moyenne 0,2 mm pour le corps et 0,6 mm pour le fond ont été réalisées par injection soufflage avec biorientation et thermofixation sur moules chauds, selon le procédé classique en deux étapes.

Les bouteilles sont remplies à froid, en présence d'un bactériostatique, d'une solution anisée non alcoolisée contenant 400 mg/l d'anéthole, puis sont laissées 12 mois à 20°C.

On évalue la perte en anéthole périodiquement. On constate qu'après 9 mois, la perte en anéthole est de 22 % et qu'après un an, elle est de 25 %. On observe donc un palier à partir de 9 mois, la perte en anéthole ayant peu évoluée depuis ce terme.

### Exemple 2 (comparatif)

Des bouteilles formées en polyéthylènetérephtalate ayant un taux de cristallinité de 15 % environ sont remplies de la même solution que celle de l'exemple 1 et sont laissées 12 mois à 20°C.

On évalue la perte en anéthole périodiquement. On constate qu'après 6 mois, la perte est de 92 % et de 100 % après 12 mois.

Les résultats sont résumés dans le tableau ci-dessous ainsi que dans la figure annexée où est représenté le pourcentage de perte en anéthole en mois ( PEN 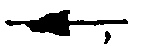 , PET -■-).

| | | | | | |
|---|---|---|---|---|---|
| Mois | 0 | 3 | 6 | 9 | 12 |
| PEN | 0 | 5 | 16 | 22 | 25 |
| PET % | 0 | 65 | 92 | 97 | 100 |

Ce résultat est donc tout à fait surprenant compte tenu de la faible variation de structure (naphtalène au lieu de benzène).

## Revendications

1. Conditionnement de longue durée monocouche ou multicouche contenant une boisson, alcoolisée ou non, à base d'anéthole, **caractérisé en ce que** la couche en contact avec ladite boisson est formée d'un polymère comprenant des motifs aromatiques condensés, ledit polymère étant le polyester d'éthylène glycol et d'acide naphtalène (PEN).

2. Conditionnement selon la revendication 1, **caractérisé en ce que** le polymère présente un taux de cristallinité supérieur ou égale à 20%.

3. Conditionnement selon la revendication 2, **caractérisé en ce que** le polymère présente un taux de cristallinité entre 20 et 45%.

4. Conditionnement selon l'une des revendications 1 à 3, **caractérisé en ce qu'**il est sous la forme d'une monocouche.

5. Conditionnement selon la revendication 4, **caractérisé en ce qu'**il se présente sous la forme d'une bouteille d'épaisseur comprise entre 0,2 et 0,5 mm pour le corps et 0,5 et 2,5 mm pour le fond.

6. Conditionnement selon la revendication 4 ou 5, **caractérisé en ce que** la bouteille est pourvue d'un moyen d'obturation dont la face en regard de l'ouverture de la bouteille est pourvue d'une couche de polyester d'éthylène glycol et d'acide naphtalène.

7. Conditionnement selon la revendication 1, **caractérisé en ce que** la boisson est non alcoolisée ou faiblement alcoolisée.

8. Conditionnement selon la revendication 7, **caractérisé en ce que** la boisson comprend jusqu'à 10% en volume d'alcool.

9. Conditionnement selon la revendication 7, **caractérisé en ce que** la boisson comprend de 3 à 9% en volume d'alcool.

10. Conditionnement selon l'une des revendications 1 et 7 à 9, **caractérisé en ce que** la boisson aqueuse alcoolisée ou non comprend 0,01 à 2 g/l d'anéthole.

11. Conditionnement selon la revendication 10, **caractérisé en ce que** la boisson aqueuse alcoolisée ou non comprend 0,02 à 2 g/l d'anéthole.

12. Moyen d'obturation pour conditionnement selon l'une quelconque des revendications précédentes, pourvu d'une pellicule interne formée d'un film de polyester d'éthylène glycol et d'acide naphtalène venant en application sur l'ouverture dudit conditionnement.

13. Moyen d'obturation selon la revendication 12, **caractérisé en ce qu'**il est constitué d'une capsule cylindrique à l'intérieur de laquelle est logée une pellicule interne formée d'un film de polyester d'éthylène glycol et d'acide naphtalène venant en application sur l'ouverture dudit conditionnement.

14. Utilisation de polyester d'éthylène glycol et d'acide naphtalène pour la réalisation d'un conditionnement monocouche ou multicouche pour boissons à base d'anéthole, notamment faiblement alcoolisées, afin de limiter la déperdition d'anéthole au contact de la paroi du conditionnement, ledit polyester d'éthylène glycol et d'acide naphtalène formant la couche en contact avec lesdites boissons.

15. Procédé destiné à limiter la dégradation des boissons à base d'anéthole, notamment faiblement ou non alcoolisées, **caractérisé en ce que** l'on emmagasine lesdites boissons dans un conditionnement de longue durée monocouche ou multicouche dont la couche en contact avec lesdites boissons est constituée de polyester d'éthylène glycol et d'acide naphtalène.

## Claims

1. Monolayer or multilayer long-life packaging containing an anethole-based, optionally alcoholic beverage, **characterized in that** the layer in contact with the said beverage is formed from a polymer containing condensed aromatic units, the said polymer being the polyester of ethylene glycol and of naphthalene acid (PEN).

2. Packaging according to Claim 1, **characterized in that** the polymer has a degree of crystallinity higher than or equal to 20%.

3. Packaging according to Claim 2, **characterized in that** the polymer has a degree of crystallinity between 20 and 45%.

4. Packaging according to one of Claims 1 to 3, **characterized in that** it is in the form of a monolayer.

5. Packaging according to Claim 4, **characterized in that** it is in the form of a bottle of thickness of between 0.2 and 0.5 mm in the case of the body and 0.5 and 2.5 mm in the case of the bottom.

6. Packaging according to Claim 4 or 5, **characterized in that** the bottle is provided with a means of closure the face of which facing the opening of the bottle is provided with a layer of polyester of ethylene glycol and of naphthalene acid.

7. Packaging according to Claim 1, **characterized in that** the beverage is nonalcoholic or weakly alcoholic.

8. Packaging according to Claim 7, **characterized in that** the beverage includes up to 10 % by volume of alcohol.

9. Packaging according to Claim 7, **characterized in that** the beverage includes from 3 to 9% by volume of alcohol.

10. Packaging according to one of Claims 1 and 7 to 9, **characterized in that** the alcoholic or nonalcoholic aqueous beverage includes 0.01 to 2 g/l of anethole.

11. Packaging according to Claim 10, **characterized in that** the alcoholic or nonalcoholic aqueous beverage includes 0.02 to 2 g/l of anethole.

12. Means of closure for packaging according to any one of the preceding claims, provided with an inner foil formed from a film of polyester of ethylene glycol and of naphthalene acid, which is applied onto the opening of the said packaging.

13. Means for closure according to Claim 12, **characterized in that** it consists of a cylindrical cap inside which is housed an inner foil formed from a film of polyester of ethylene glycol and of naphthalene acid, which is applied onto the opening of the said packaging.

14. Use of polyester of ethylene glycol and of naphthalene acid, for the production of a monolayer or multilayer packaging for anethole-based beverages, in particular weakly alcoholic ones, in order to limit the loss of anethole in contact with the wall of the packaging, the said polyester of ethylene glycol and of naphthalene acid forming the layer in contact with the said beverages.

15. Process intended to limit the degradation of anethole-based beverages, in particular weakly alcoholic or nonalcoholic ones, **characterized in that** the said beverages are stored in a monolayer or multilayer long-life packaging in which the layer in contact with the said beverages consists of polyester of ethylene glycol and of naphthalene acid.

## Patentansprüche

1. Eine Schicht oder eine Mehrzahl von Schichten aufweisendes Langzeitbehältnis, welches ein alkoholisiertes oder nichtalkoholisiertes Getränk auf der Grundlage von Anethol enthält, **dadurch gekennzeichnet, dass** die mit dem Getränk in Kontakt stehende Schicht aus einem Polymer gebildet wird, welches aromatische kondensierte Einheiten umfasst, wobei das Polymer der Polyester von Ethylenglycol und Naphthalinsäure (PEN) ist.

2. Behältnis nach Anspruch 1, **dadurch gekennzeichnet, dass** das Polymer einen Kristallinitätsgrad über oder gleich 20% aufweist.

3. Behältnis nach Anspruch 2, **dadurch gekennzeichnet, dass** das Polymer einen Kristallinitätsgrad zwischen 20 und 45% aufweist.

4. Behältnis nach einem der Ansprüche 1 bis 3, **dadurch gekennzeichnet, dass** es in Form einer einzelnen Schicht vorliegt.

5. Behältnis nach Anspruch 4, **dadurch gekennzeichnet, dass** es in Form einer Flasche mit einer Dicke zwischen 0,2 und 0,5 mm für den Körper und 0,5 und 2,5 mm für den Boden vorliegt.

6. Behältnis nach Anspruch 4 oder 5, **dadurch gekennzeichnet, dass** die Flasche mit einem Verschlussmittel versehen ist, dessen der Öffnung der Flasche zugewandte Fläche mit einer Schicht von Polyester von Ethylenglycol und Naphthalinsäure versehen ist.

7. Behältnis nach Anspruch 1, **dadurch gekennzeichnet, dass** das Getränk nicht alkoholisiert oder gering alkoholisiert ist.

8. Behältnis nach Anspruch 7, **dadurch gekennzeichnet, dass** das Getränk bis zu 10 Vol.-% Alkohol enthält.

9. Behältnis nach Anspruch 7, **dadurch gekennzeichnet, dass** das Getränk 3 bis 9 Vol.-% Alkohol enthält.

10. Behältnis nach einem der Ansprüche 1 und 7 bis 9, **dadurch gekennzeichnet, dass** das alkoholisierte oder nicht-alkoholisierte wässrige Getränk 0,01 bis 2 g/l Anethol enthält.

11. Behältnis nach Anspruch 10, **dadurch gekennzeichnet, dass** das alkoholisierte oder nicht-alkoholisierte wässrige Getränk 0,02 bis 2 g/l Anethol enthält.

12. Verschlussmittel für ein Behältnis nach einem der vorangegangenen Ansprüche, welches mit einem innerlichen dünnen Überzug, welcher aus einem Film von Polyester von Ethylenglycol und Naphthalinsäure gebildet wird, welcher auf der Öffnung des Behältnisses zur Anwendung kommt, versehen ist.

13. Verschlussmittel nach Anspruch 12, **dadurch gekennzeichnet, dass** es aus einer zylindrischen Kapsel gebildet wird, in deren Innerem sich ein innerlicher dünner Überzug, welcher aus einem Film von Polyester von Ethylenglycol und Naphthalinsäure gebildet wird, welcher auf der Öffnung des Behältnisses zur Anwendung kommt, befindet.

14. Verwendung von Polyester von Ethylenglycol und Naphthalinsäure für die Herstellung eines eine Schicht oder eine Mehrzahl von Schichten aufweisenden Behältnisses für Getränke auf der Grundlage von Anethol, welche insbesondere schwach alkoholisiert sind, um den Verlust von Anethol in Kontakt mit der Wand des Behältnisses zu begrenzen, wobei der Polyester von Ethylenglycol und Naphthalinsäure die mit den Getränken in Kontakt stehende Schicht bildet.

15. Verfahren, welches dazu bestimmt ist, den Abbau von Getränken auf der Grundlage von Anethol, welche insbesondere schwach oder nicht alkoholisiert sind, zu begrenzen, **dadurch gekennzeichnet, dass** man die Getränke in einem eine Schicht oder eine Mehrzahl von Schichten aufweisenden Langzeitbehältnis einlagert, bei dem die mit den Getränken in Kontakt stehende Schicht aus Polyester von Ethylenglycol und Naphthalinsäure gebildet wird.
